# FASCICULE DE BREVET EUROPEEN

(11) **EP 3 215 748 B1**
(45) Date de publication et mention de la délivrance du brevet: **12.12.2018**
(21) Numéro de dépôt: 15798526.8
(22) Date de dépôt: 30.10.2015
(51) Int. Cl.: F16B 5/12, B29C 70/68, F16L 3/13, F16B 2/24, F16B 5/06

(54) **DISPOSITIF DE MAINTIEN DESTINE A ETRE PRESENT A LA SURFACE D'UNE PIECE EN MATERIAU COMPOSITE**
HALTEVORRICHTUNG ZUR VERWENDUNG AUF DER OBERFLÄCHE EINES TEILS AUS VERBUNDMATERIAL
HOLDING DEVICE INTENDED TO BE PRESENT AT THE SURFACE OF A PART MADE OF COMPOSITE MATERIAL

(30) Priorité: 05.11.2014 FR 1460671
(43) Date de publication de la demande: 13.09.2017
(73) Titulaire: Safran Aircraft Engines, 75015 Paris (FR)
(72) Inventeur: LAMOUCHE, Damien, F-77550 Moissy-Cramayel Cedex (FR); PAIXAO, Adrien, F-77550 Moissy-Cramayel Cedex (FR); QUILLENT, Hélène, Elise, Cécile, F-77550 Moissy-Cramayel Cedex (FR); COUE, Kévin, F-77550 Moissy-Cramayel Cedex (FR)
(74) Mandataire: Laïk, Eric
(86) Numéro de dépôt international: PCT/FR2015/052930
(87) Numéro de publication internationale: WO 2016/071610

(56) Documents cités:
- DE-U1-202005 008 570
- FR-A1- 2 863 587
- US-A- 2 541 828
- US-A- 4 840 333
- US-A1- 2005 098 697

## Description

### Arrière-plan de l'invention

L'invention concerne des dispositifs permettant d'assurer le maintien de pièces entre elles.

Il est possible afin de maintenir des pièces entre elles d'équiper l'une des pièces avec un organe de maintien définissant une zone de maintien dans laquelle l'autre pièce est destinée à venir se loger. L'organe de maintien peut directement être fixé par collage à la pièce. Toutefois, l'adhésion d'un organe de maintien directement collé à la surface d'une pièce en matériau composite peut ne pas être entièrement satisfaisante et un décollage de l'organe de maintien peut se produire. On connaît DE 20 2005008570 U qui divulgue un organe de maintien permettant le maintien d'une pièce.

Il existe donc un besoin pour améliorer l'adhésion d'organes de maintien à des pièces en matériau composite, et notamment à des carters de moteurs aéronautiques en matériau composite.

### Objet et résumé de l'invention

A cet effet, l'invention propose, selon un premier aspect, un dispositif de maintien destiné à être présent à la surface d'une première pièce en matériau composite afin de permettre le maintien d'une deuxième pièce à la première pièce, le dispositif de maintien comportant :
- un corps en matériau composite comportant une structure fibreuse ainsi qu'une matrice présente dans la porosité de la structure fibreuse, et
- un organe de maintien comportant une base et des pattes de maintien s'étendant depuis la base de chaque côté de celle-ci, les pattes de maintien étant destinées à définir une zone de maintien de la deuxième pièce à la première pièce, la base du dispositif de maintien étant présente dans le corps et les pattes de maintien faisant saillie au travers d'une surface du corps.

L'invention consiste donc à utiliser un dispositif de maintien dans lequel la base de l'organe de maintien est enveloppée par un corps en matériau composite. Le corps peut par exemple être un matériau composite à matrice organique (CMO) ou un matériau composite à matrice céramique (CMC). Dans le cas où le corps est en matériau composite à matrice organique, ledit corps peut par exemple présenter une matrice en matériau thermoplastique obtenue par moulage, la structure fibreuse constituant le renfort de cette matrice. Le corps est destiné à assurer la fixation de l'organe de maintien à la première pièce. L'invention permet avantageusement d'obtenir une meilleure adhésion de l'organe de maintien à la première pièce par rapport au cas où l'organe de maintien est directement collé à cette première pièce, du fait de la fixation de l'organe de maintien à la première pièce par l'intermédiaire du corps en matériau composite.

Dans un exemple de réalisation, la base de l'organe de maintien peut être drapée entre au moins un premier pli fibreux densifié et au moins un deuxième pli fibreux densifié, le deuxième pli fibreux présentant des ajours au travers desquels s'étendent les pattes de maintien.

En particulier, au moins un troisième pli fibreux densifié ajouré peut être présent entre le premier pli fibreux et le deuxième pli fibreux, la base de l'organe de maintien étant logée dans l'ajour du troisième pli fibreux.

Une telle configuration permet avantageusement de limiter, voire de supprimer, la surépaisseur dans le dispositif de maintien liée à l'épaisseur de la base de l'organe de maintien.

En variante, la structure fibreuse peut être une structure fibreuse obtenue par tissage tridimensionnel.

Dans un exemple de réalisation, les pattes de maintien peuvent être configurées pour permettre le clipsage de la deuxième pièce à la première pièce. En variante, les pattes de maintien peuvent être configurées pour définir un collier de serrage apte à maintenir par serrage la deuxième pièce à la première pièce.

Dans un exemple de réalisation, le dispositif peut, en outre, comporter un ou plusieurs pions de centrage présents sur la surface du dispositif opposée à celle traversée par les pattes de maintien.

Dans un exemple de réalisation, l'organe de maintien présente une forme générale en forme de lyre.

La présente invention vise également une pièce en matériau composite présentant à sa surface un dispositif de maintien tel que défini plus haut.

La pièce peut constituer un carter de moteur aéronautique.

Le dispositif de maintien peut être fixé à la pièce par une couche d'adhésif.

La présente invention vise également un ensemble comportant une première pièce telle que définie plus haut et une deuxième pièce maintenue à la première pièce à l'aide du dispositif de maintien.

La deuxième pièce peut, par exemple, être un tuyau, un câble ou une couette anti-feu.

La présente invention vise également un aéronef équipé d'un ensemble tel que défini plus haut.

La présente invention vise également un procédé de fabrication d'un dispositif de maintien tel que défini plus haut, comprenant les étapes suivantes :
a) application d'une pression sur au moins une structure fibreuse présente dans une cavité de moulage, la structure fibreuse comportant :
   ▪ un organe de maintien comportant une base et des pattes de maintien s'étendant depuis la base de chaque côté de celle-ci, les pattes de maintien étant destinées à définir une zone de maintien d'une deuxième pièce à une première pièce, et
   ▪ au moins un premier pli fibreux imprégné et au moins un deuxième pli fibreux imprégné, la base de l'organe de maintien étant présente entre les premier et deuxième plis fibreux imprégnés, le deuxième pli fibreux imprégné présentant des ajours traversés par les pattes de maintien, une partie centrale du deuxième pli fibreux imprégné étant en regard de la base de l'organe de maintien et des parties latérales du deuxième pli fibreux imprégné étant situées de part et d'autre de la partie centrale,
   la pression appliquée lors de l'étape a) étant exercée sur la partie centrale et sur les parties latérales du deuxième pli fibreux imprégné,
b) traitement thermique afin de former une matrice dans la porosité des premier et deuxième plis fibreux et d'obtenir ainsi le dispositif de maintien, la pression appliquée lors de l'étape a) étant maintenue durant l'étape b).

Un tel procédé est avantageux car il permet d'obtenir un plaquage homogène des plis sur les parties latérales et centrales du dispositif de maintien tout en limitant les phénomènes de porosité et de zones sèches. Cela permet avantageusement d'obtenir une bonne planéité du drapage de l'organe de maintien après traitement thermique.

Dans un exemple de réalisation, la structure fibreuse peut être présente entre un support et un bloc inférieur au travers duquel s'étendent les pattes de maintien, le bloc inférieur appliquant la pression sur les parties latérales du deuxième pli fibreux imprégné lors de l'étape a).

Dans un exemple de réalisation, le bloc inférieur peut être formé par assemblage de deux demi-blocs, les deux demi-blocs étant séparables l'un de l'autre de part et d'autre des pattes de maintien lors du démoulage du dispositif de maintien obtenu.

Dans un exemple de réalisation, la cavité de moulage peut être mise sous vide au moins durant l'étape b).

Dans un exemple de réalisation, la structure fibreuse peut, en outre, comporter au moins un troisième pli fibreux ajouré imprégné présent entre le premier pli fibreux et le deuxième pli fibreux, la base de l'organe de maintien étant logée dans l'ajour du troisième pli fibreux.

Dans un exemple de réalisation, la structure fibreuse peut être présente sur un support, la face du support en regard de la structure fibreuse présentant une pluralité de trous borgnes.

Un tel mode de réalisation est avantageux car il permet de former, par exemple, des pions de centrage sur une face du dispositif de maintien par fluage de la composition imprégnant les plis dans les trous borgnes lors de la fabrication du dispositif de maintien.

Dans un exemple de réalisation, une pluralité de structures fibreuses peuvent être traitées simultanément.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 représente de manière schématique un premier exemple de dispositif de maintien selon l'invention,
- la figure 2 représente de manière schématique une pièce selon l'invention présentant à sa surface le dispositif de maintien selon la figure 1,
- les figures 3 à 6 représentent de manière schématique des variantes de dispositif de maintien selon l'invention,
- les figures 7 à 9 illustrent schématiquement la mise en oeuvre de procédés de fabrication d'un dispositif de maintien selon l'invention, et
- les figures 10 et 11 représentent des détails d'éléments utilisables lors de la fabrication du dispositif de maintien selon l'invention.

### Description détaillée de modes de réalisation

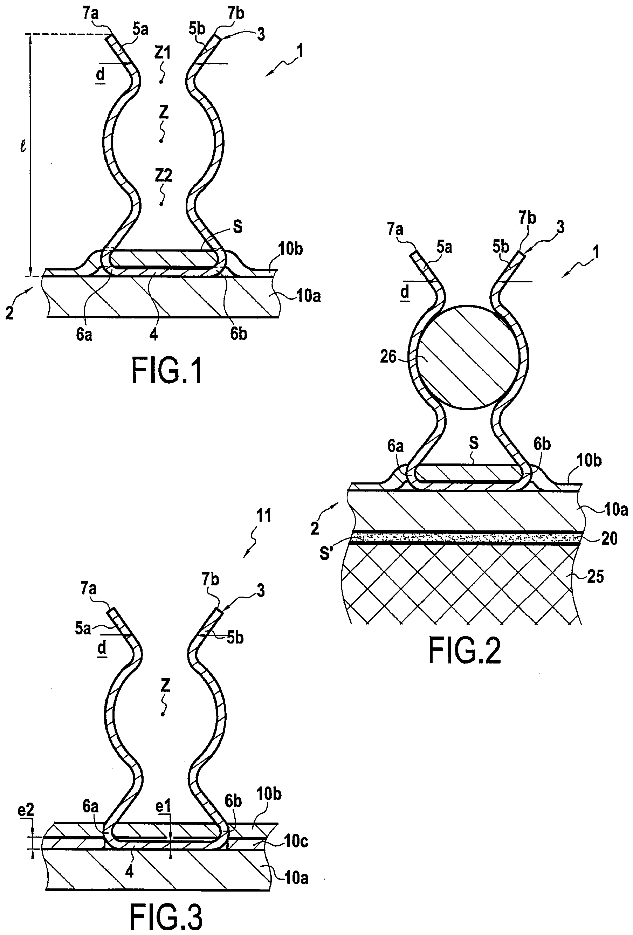

On a représenté à la figure 1 un premier exemple de dispositif de maintien 1 selon l'invention. Le dispositif de maintien 1 de la figure 1 comporte un corps 2 en matériau composite comportant une structure fibreuse dans la porosité de laquelle une matrice est présente. Le corps peut par exemple être un matériau composite à matrice organique ou un matériau composite à matrice céramique. Le dispositif de maintien 1 comporte, en outre, un organe de maintien 3 comportant une base 4 et des pattes de maintien 5a et 5b s'étendant depuis la base 4 de chaque côté de celle-ci. L'organe de maintien 3 peut être fait d'un matériau métallique. Dans l'exemple illustré à la figure 1, la base 4 de l'organe de maintien 3 est présente entre des premiers plis fibreux densifiés 10a et des deuxièmes plis fibreux densifiés 10b, les deuxièmes plis fibreux 10b présentant des ajours au travers desquels s'étendent les pattes de maintien 5a et 5b. Les pattes de maintien 5a et 5b forment chacune, lorsque l'on se déplace vers la base 4, une portion coudée 6a et 6b et font saillie au travers de la surface S du corps 2. Le dispositif de maintien 1 est destiné à être présent à la surface S' d'une première pièce 25 en matériau composite. Une telle configuration est représentée à la figure 2, dans laquelle le dispositif de maintien 1 est fixé à la surface S' de la première pièce 25 par l'intermédiaire d'une couche d'adhésif 20. Une telle configuration n'est toutefois pas obligatoire comme il sera expliqué plus bas. La première pièce peut, par exemple, être un carter de moteur aéronautique, par exemple en matériau composite à matrice organique ou en matériau composite à matrice céramique. Les pattes de maintien 5a et 5b du dispositif 1 définissent une zone de maintien Z dans laquelle une deuxième pièce 26 est logée afin d'être maintenue à la première pièce 25.

Dans l'exemple illustré à la figure 1, le dispositif de maintien 1 présente une forme générale en forme de lyre. En d'autres termes, lorsque l'on se déplace depuis les extrémités 7a et 7b des pattes de maintien 5a et 5b vers la surface S du corps 2, la distance d séparant les pattes 5a et 5b est tout d'abord décroissante, puis croissante, puis décroissante.

Comme illustré à la figure 1, la majeure partie (plus de 50%) de la longueur I des pattes de maintien 5a et 5b fait saillie du corps 2.

Les pattes de maintien 5a et 5b dans cette configuration sont configurées pour permettre le clipsage de la deuxième pièce 26. Pour ce faire, la deuxième pièce 26 est insérée entre les pattes 5a et 5b au niveau des extrémités 7a et 7b en direction de la surface S jusqu'à venir se clipser dans la zone Z. Dans l'exemple illustré, la zone Z est présente entre deux zones Z₁ et Z₂ dans lesquelles la distance d entre les pattes 5a et 5b est minimale. Ce clipsage permet de maintenir la deuxième pièce à la première pièce à l'aide du dispositif de maintien.

On a représenté à la figure 3 une variante de dispositif de maintien 11 selon l'invention. De la même manière qu'à la figure 1, la base 4 de l'organe de maintien 3 est présente entre des premiers plis fibreux densifiés 10a et des deuxièmes plis fibreux densifiés 10b, les deuxièmes plis fibreux présentant des ajours au travers desquels s'étendent les pattes de maintien 5a et 5b. Dans l'exemple de la figure 3, au moins un troisième pli fibreux densifié 10c est présent entre les deuxièmes plis fibreux 10b et les premiers plis fibreux 10a. Le troisième pli fibreux 10c présente un ajour traversant dans lequel la base 4 de l'organe de maintien est logée. L'épaisseur e₁ de la base 4 de l'organe de maintien peut être sensiblement égale à l'épaisseur e₂ du troisième pli fibreux 10c. Dans cette configuration, le dispositif de maintien 11 obtenu ne présente pas de surépaisseur liée à l'épaisseur de la base 4 de l'organe de maintien 3. En variante, l'épaisseur e₁ de la base 4 est inférieure ou supérieure à l'épaisseur e₂.

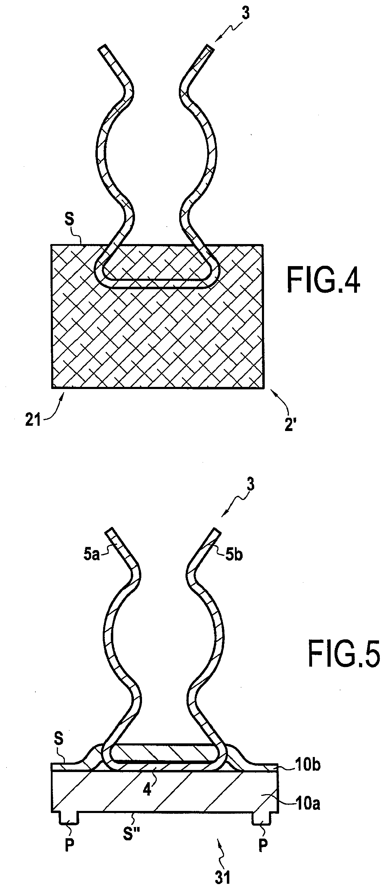

On a représenté à la figure 4 un autre exemple de dispositif de maintien 21 selon l'invention dans lequel le corps 2' comporte une structure fibreuse obtenue par tissage tridimensionnel, par exemple par tissage multicouche. Afin d'obtenir une telle structure, des fils peuvent être directement tissés autour de l'organe de maintien 3.

Par « tissage tridimensionnel » ou « tissage 3D », on entend ici un mode de tissage par lequel certaines au moins des couches de chaîne lient des couches de trame sur plusieurs couches de trame.

Par « tissage multicouche », on désigne ici un tissage 3D avec plusieurs couches de trame dont l'armure de base de chaque couche est équivalente à une armure de tissu 2D classique, telle qu'une armure de type toile, satin ou sergé, mais avec certains points de l'armure qui lient les couches de trame entre elles.

On a représenté à la figure 5 un autre exemple de dispositif de maintien 31. Dans cet exemple, des pions de centrage P sont présents sur la surface S" du dispositif 31 opposée à celle traversée par les pattes 5a et 5b. La présence de ces pions de centrage P permet d'assurer facilement un bon positionnement du dispositif de maintien 31 sur la première pièce ainsi que d'éviter la rotation du dispositif de maintien 31 lorsqu'il est positionné sur la première pièce. Comme mentionné plus haut, les pions P peuvent être obtenus par moulage durant la fabrication du dispositif de maintien. En variante, ces pions P peuvent être constitués par des éléments rapportés présents dans les plis.

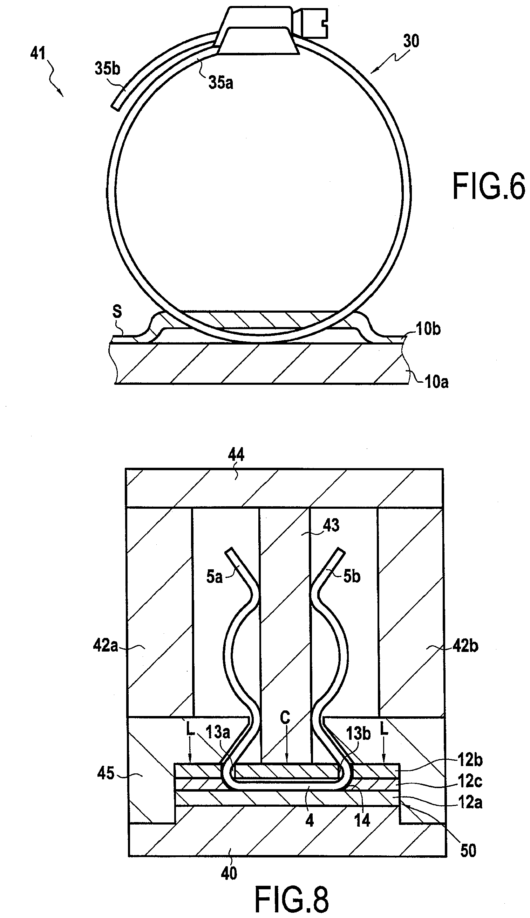

Dans la variante illustrée à la figure 6, le dispositif 41 présente un organe de maintien 30 comportant des pattes de maintien 35a et 35b configurées pour définir un collier de serrage apte à maintenir par serrage la deuxième pièce à la première pièce. Le collier de serrage formé par les pattes 35a et 35b peut par exemple être de type Serflex.

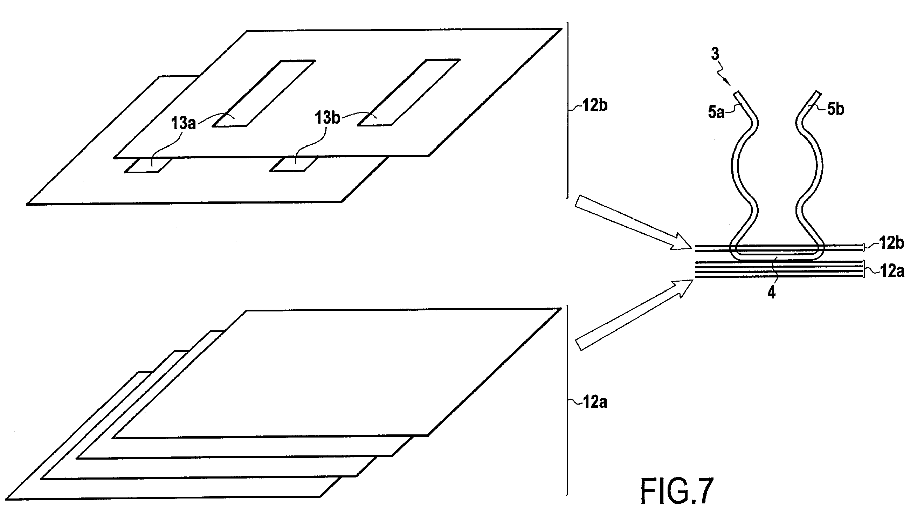

Nous allons à présent décrire la figure 7 laquelle est relative à la fabrication d'un dispositif de maintien 1 tel qu'illustré aux figures 1 et 2. Dans un premier temps, l'organe de maintien 3 est placé sur des premiers plis fibreux 12a pré-imprégnés d'une résine. On superpose ensuite des deuxièmes plis fibreux 12b pré-imprégnés d'une résine. Les deuxièmes plis fibreux 12b présentent, comme illustré, des ajours 13a et 13b au travers desquels les pattes de maintien vont s'étendre après positionnement des deuxièmes plis fibreux 12b sur les premiers plis fibreux 12a. On a illustré à la figure 7 un exemple dans lequel une pluralité de premiers plis 12a et une pluralité de deuxièmes plis 12b sont utilisés. On ne sort pas du cadre de l'invention lorsqu'un unique premier pli 12a et/ou un unique deuxième pli 12b est utilisé. Une fois les deuxièmes plis 12b positionnés sur les premiers plis 12a, une pression peut être appliquée sur les premiers et deuxièmes plis 12a et 12b. Un traitement thermique peut alors être réalisé alors que cette pression est maintenue afin de polymériser la résine et former une matrice dans la porosité des premiers 12a et deuxièmes plis 12b et permettre de solidariser ces plis 12a et 12b entre eux. On obtient à l'issue d'un tel traitement thermique le dispositif de maintien 1 tel qu'illustré aux figures 1 et 2. Un adhésif peut ou non être utilisé de manière à améliorer la fixation de l'organe de maintien aux premiers et deuxièmes plis.

L'exemple illustré à la figure 7 illustre le cas où les plis 12a et 12b sont déjà imprégnés de résine avant le drapage de l'organe de maintien. On peut en variante d'abord placer l'organe de maintien sur des premiers plis fibreux secs puis positionner des deuxièmes plis fibreux secs sur les premiers plis fibreux secs. La résine peut ensuite être appliquée sur les premiers et deuxièmes plis à l'aide d'un applicateur, par exemple au rouleau. La suite du procédé peut être telle que décrite plus haut afin d'obtenir le dispositif de maintien (application d'une pression et traitement thermique de polymérisation de la résine alors que cette pression est maintenue).

Par ailleurs, l'exemple illustré à la figure 7 illustre l'utilisation de plis fibreux 12a et 12b de forme rectangulaire en vue de dessus. On ne sort pas du cadre de l'invention lorsque ces plis ont une autre forme, par exemple carrée ou ronde.

L'homme du métier saura choisir le nombre, la forme et la nature chimique des plis utilisés en fonction de l'application envisagée.

Il a été décrit en lien avec la figure 2 que le dispositif de maintien 1 pouvait être fixé par collage à la surface de la première pièce 25. Cela n'est toutefois pas obligatoire. En effet, lorsque des premiers plis fibreux imprégnés sont utilisés, il est possible de les placer sur une ébauche de la première pièce comportant une préforme fibreuse dans la porosité de laquelle une résine est présente et de procéder au traitement thermique. Le traitement thermique réalisé va permettre de polymériser la résine présente dans les premiers plis fibreux et dans l'ébauche ce qui va permettre de solidariser le dispositif de maintien à la première pièce. Dans ce cas, il est donc possible de ne pas mettre en oeuvre d'adhésif afin d'assurer la fixation du dispositif de maintien à la première pièce.

On a illustré à la figure 8 un exemple de procédé de fabrication d'un dispositif de maintien selon l'invention mettant en oeuvre un moule définissant une cavité de moulage dans laquelle une structure fibreuse 50 est présente. Dans cette structure fibreuse 50, la base 4 de l'organe de maintien est drapée entre un premier pli fibreux 12a et un deuxième pli fibreux 12b. Comme illustré, un troisième pli fibreux 12c est présent entre les premier et deuxième plis fibreux 12a et 12b. Le troisième pli fibreux présente, comme expliqué plus haut, un ajour traversant 14 dans lequel la base 4 de l'organe de maintien est présente. Cette structure 50 repose sur un support rigide 40. Dans ce procédé, il y a application d'une pression sur la structure fibreuse 50 au niveau d'une partie centrale C du deuxième pli 12b en regard de la base 4 de l'organe de maintien et au niveau des parties latérales L du deuxième pli 12b situées de part et d'autre de la partie centrale C. Concrètement, le bloc central 43 va appliquer une pression sur la partie centrale C et le bloc inférieur 45 va appliquer une pression sur les parties latérales L. Le bloc central 43 permet le plaquage des plis au centre de l'organe de maintien. Le bloc central 43 peut être en un matériau métallique éventuellement revêtu d'un revêtement anti-adhérent au moins dans les zones destinées à venir en contact avec l'organe de maintien. En variante, le bloc central 43 peut être en polytétrafluoroéthylène (Téflon®). Le bloc inférieur 45 possède, quant à lui, un usinage (épaulement) pour venir accueillir l'organe de maintien. Le bloc inférieur 45 peut être en matériau métallique, éventuellement revêtu d'un revêtement anti-adhérent. Des parois latérales 42a et 42b et supérieure 44 du moule sont présentes afin de fermer le moule et d'assurer une étanchéité vis-à-vis du milieu extérieur. Alors que la pression est maintenue, un traitement thermique va être réalisé afin de polymériser la résine imprégnant les plis 12a, 12b et 12c et obtenir ainsi le dispositif de maintien. Il est possible de faire le vide dans le moule (à la fois dans la partie haute et dans la partie basse) durant la polymérisation.

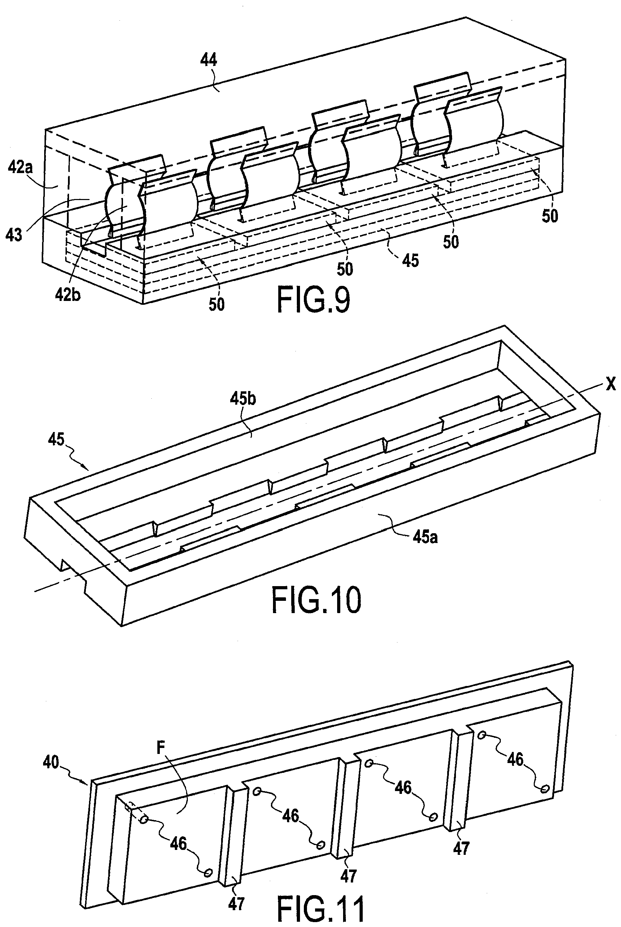

La figure 9 est une vue en perspective d'un moule utile pour fabriquer le dispositif de maintien selon l'invention et présentant une section transversale telle qu'illustrée à la figure 8. Comme illustré, une pluralité de structures fibreuses 50 sont présentes dans la cavité de moulage et sont traitées simultanément. On a représenté un moule permettant le traitement de quatre structures fibreuses 50, bien entendu on ne sort pas du cadre de l'invention si un nombre différent de structures fibreuses est présent dans le moule.

La figure 10 illustre un détail du bloc inférieur 45. Dans cet exemple de réalisation, le bloc inférieur 45 est formé par assemblage de deux demi-blocs 45a et 45b, les deux demi-blocs 45a et 45b étant séparables l'un de l'autre de part et d'autre de l'axe X. Dans cet exemple de réalisation, les demi-blocs 45a et 45b sont séparables de part et d'autre des pattes de maintien lors du démoulage du dispositif de maintien obtenu. Un tel mode de réalisation est avantageux car il permet de faciliter l'insertion des différents éléments dans le moule et le démoulage du dispositif de maintien obtenu. Une fois les deux demi-blocs mis en place, ces derniers sont bridés. Bien entendu, il est en variante possible de mettre en oeuvre un bloc inférieur constitué d'une seule pièce.

La figure 11 illustre un détail du support 40 sur lequel la structure fibreuse repose. La face F du support 40 destinée à être placée en regard de la structure fibreuse est munie de trous borgnes 46 permettant la réalisation de pions de centrage par moulage de la résine imprégnant les plis. Lors du procédé de fabrication du dispositif de maintien, la résine flue dans les trous borgnes 46 afin de former, après polymérisation, les pions de centrage. La face F comporte, en outre, des parois séparatrices 47 destinées à délimiter différentes zones de placement des structures fibreuses. On peut en variante utiliser un support dont la face destinée à être présente en regard de la structure fibreuse ne présente ni trou borgne, ni paroi séparatrice.

L'expression « compris(e) entre ... et ... » ou « allant de ... à ... » doit se comprendre comme incluant les bornes.

## Revendications

1. Dispositif de maintien (1 ; 11 ; 21 ; 31) destiné à être présent à la surface (S') d'une première pièce (25) en matériau composite afin de permettre le maintien d'une deuxième pièce (26) à la première pièce (25), le dispositif de maintien (1 ; 11 ; 21 ; 31) étant **caractérisé en ce qu'**il comporte :
- un corps (2 ; 2') en matériau composite comportant une structure fibreuse ainsi qu'une matrice présente dans la porosité de la structure fibreuse, et
- un organe de maintien (3 ; 30) comportant une base (4) et des pattes de maintien (5a ; 5b ; 35a ; 35b) s'étendant depuis la base (4) de chaque côté de celle-ci, les pattes de maintien (5a ; 5b ; 35a ; 35b) étant destinées à définir une zone de maintien (Z) de la deuxième pièce (26) à la première pièce (25), la base (4) du dispositif de maintien étant présente dans le corps (2 ; 2') et les pattes de maintien (5a ; 5b ; 35a ; 35b) faisant saillie au travers d'une surface (S) du corps (2 ; 2').

2. Dispositif (1 ; 11 ; 31 ; 41) selon la revendication 1, **caractérisé en ce que** la base (4) de l'organe de maintien est drapée entre au moins un premier pli fibreux densifié (10a) et au moins un deuxième pli fibreux densifié (10b), le deuxième pli fibreux (10b) présentant des ajours au travers desquels s'étendent les pattes de maintien (5a ; 5b ; 35a ; 35b).

3. Dispositif (11) selon la revendication 2, **caractérisé en ce qu'**au moins un troisième pli fibreux densifié ajouré (10c) est présent entre le premier pli fibreux (10a) et le deuxième pli fibreux (10b), la base (4) de l'organe de maintien (3) étant logée dans l'ajour du troisième pli fibreux (10c).

4. Dispositif (21) selon la revendication 1, **caractérisé en ce que** la structure fibreuse est une structure fibreuse obtenue par tissage tridimensionnel.

5. Dispositif (1 ; 11 ; 21 ; 31) selon l'une quelconque des revendications 1 à 4, **caractérisé en ce que** les pattes de maintien (5a ; 5b) sont configurées pour permettre le clipsage de la deuxième pièce (26) à la première pièce (25).

6. Dispositif (41) selon l'une quelconque des revendications 1 à 4, **caractérisé en ce que** les pattes de maintien (35a ; 35b) sont configurées pour définir un collier de serrage apte à maintenir par serrage la deuxième pièce à la première pièce.

7. Dispositif (31) selon l'une quelconque des revendications 1 à 6, **caractérisé en ce qu'**il comporte, en outre, un ou plusieurs pions de centrage (P) présents sur la surface (S") du dispositif (31) opposée à celle traversée par les pattes de maintien (5a ; 5b).

8. Dispositif (1 ; 11 ; 21 ; 31) selon l'une quelconque des revendications 1 à 7, **caractérisé en ce que** l'organe de maintien (3) présente une forme générale en forme de lyre.

9. Pièce (25) en matériau composite présentant à sa surface (S') un dispositif de maintien selon l'une quelconque des revendications 1 à 8.

10. Pièce (25) selon la revendication 9, **caractérisé en ce qu'**elle constitue un carter de moteur aéronautique.

11. Ensemble comportant une première pièce (25) selon l'une quelconque des revendications 9 et 10 et une deuxième pièce (26) maintenue à la première pièce à l'aide du dispositif de maintien.

12. Aéronef équipé d'un ensemble selon la revendication 11.

13. Procédé de fabrication d'un dispositif de maintien (1 ; 11 ; 31 ; 41) selon l'une quelconque des revendications 2, 3 et 5 à 8, comprenant les étapes suivantes :
a) application d'une pression sur au moins une structure fibreuse (50) présente dans une cavité de moulage, la structure fibreuse comportant :
▪ un organe de maintien (3 ; 30) comportant une base (4) et des pattes de maintien (5a ; 5b ; 35a ; 35b) s'étendant depuis la base (4) de chaque côté de celle-ci, les pattes de maintien (5a ; 5b ; 35a ; 35b) étant destinées à définir une zone de maintien (Z) d'une deuxième pièce (26) à une première pièce (25), et
▪ au moins un premier pli fibreux imprégné (12a) et au moins un deuxième pli fibreux imprégné (12b), la base (4) de l'organe de maintien étant présente entre les premier et deuxième plis fibreux imprégnés, le deuxième pli fibreux imprégné (12b) présentant des ajours (13a ; 13b) traversés par les pattes de maintien (5a ; 5b ; 35a ; 35b), une partie centrale (C) du deuxième pli fibreux imprégné (12b) étant en regard de la base (4) de l'organe de maintien (3 ; 30) et des parties latérales (L) du deuxième pli fibreux imprégné (12b) étant situées de part et d'autre de la partie centrale (C),
la pression appliquée lors de l'étape a) étant exercée sur la partie centrale (C) et sur les parties latérales (L) du deuxième pli fibreux imprégné (12b),
b) traitement thermique afin de former une matrice dans la porosité des premier et deuxième plis fibreux et obtenir ainsi le dispositif de maintien, la pression appliquée lors de l'étape a) étant maintenue durant l'étape b).

14. Procédé selon la revendication 13, **caractérisé en ce que** la structure fibreuse (50) est présente entre un support (40) et un bloc inférieur (45) au travers duquel s'étendent les pattes de maintien (5a ; 5b ; 35a ; 35b), le bloc inférieur (45) appliquant la pression sur les parties latérales (L) du deuxième pli fibreux imprégné (12b) lors de l'étape a).

15. Procédé selon la revendication 14, **caractérisé en ce que** le bloc inférieur (45) est formé par assemblage de deux demi-blocs (45a ; 45b), les deux demi-blocs (45a ; 45b) étant séparables l'un de l'autre de part et d'autre des pattes de maintien (5a ; 5b ; 35a ; 35b) lors du démoulage du dispositif de maintien obtenu.

16. Procédé selon l'une quelconque des revendications 13 à 15, **caractérisé en ce que** la cavité de moulage est mise sous vide au moins durant l'étape b).

## Patentansprüche

1. Haltevorrichtung (1; 11; 21; 31), die dazu bestimmt ist, auf der Oberfläche (S') eines ersten Teils (25) aus Verbundwerkstoff vorhanden zu sein, um das Halten eines zweiten Teils (26) an dem ersten Teil (25) zu ermöglichen, wobei die Haltevorrichtung (1; 11; 21; 31) **dadurch gekennzeichnet ist, dass** sie umfasst:
- einen Körper (2; 2') aus Verbundwerkstoff mit einer Faserstruktur und einer in der Porosität der Faserstruktur vorhandenen Matrix, und
- ein Halteorgan (3; 30) mit einer Basis (4) und Haltelaschen (5a; 5b; 35a; 35b), die sich von der Basis (4) aus auf jeder Seite derer erstrecken; wobei die Haltelaschen (5a; 5b; 35a; 35b) dazu bestimmt sind, einen Bereich zum Halten (Z) des zweiten Teils (26) an dem ersten Teil (25) zu definieren, wobei die Basis (4) der Haltevorrichtung in dem Körper (2; 2') vorhanden ist und die Haltelaschen (5a; 5b; 35a; 35b) durch eine Oberfläche (S) des Körpers (2; 2') hindurch ragen.

2. Vorrichtung (1; 11; 31; 41) nach Anspruch 1, **dadurch gekennzeichnet, dass** die Basis (4) des Halteorgans zwischen wenigstens einer ersten verdichteten Faserlage (10a) und wenigstens einer zweiten verdichteten Faserlage (10b) drapiert ist, wobei die zweite Faserlage (10b) Öffnungen aufweist, durch die sich die Haltelaschen (5a; 5b; 35a; 35b) erstrecken.

3. Vorrichtung (11) nach Anspruch 2, **dadurch gekennzeichnet, dass** zwischen der ersten Faserlage (10a) und der zweiten Faserlage (10b) wenigstens eine durchbrochene dritte verdichtete Faserlage (10c) vorhanden ist, wobei die Basis (4) des Halteorgans (3) in der Öffnung der dritten Faserlage (10c) aufgenommen ist.

4. Vorrichtung (21) nach Anspruch 1, **dadurch gekennzeichnet, dass** die Faserstruktur eine durch dreidimensionales Weben erhaltene Faserstruktur ist.

5. Vorrichtung (1; 11; 21; 31) nach einem der Ansprüche 1 bis 4, **dadurch gekennzeichnet, dass** die Haltelaschen (5a; 5b) dazu ausgebildet sind, das Festclipsen des zweiten Teils (26) an dem ersten Teil (25) zu ermöglichen.

6. Vorrichtung (41) nach einem der Ansprüche 1 bis 4, **dadurch gekennzeichnet, dass** die Haltelaschen (35a; 35b) dazu ausgebildet sind, einen Klemmkragen zu definieren, der geeignet ist, das zweite Teil an dem ersten Teil klemmend zu halten.

7. Vorrichtung (31) nach einem der Ansprüche 1 bis 6, **dadurch gekennzeichnet, dass** sie ferner einen oder mehrere Zentrierstifte (P) umfasst, die auf der Oberfläche (S") der Vorrichtung (31) vorhanden sind, welche der von den Haltelaschen (5a; 5b) durchgriffenen gegenüberliegt.

8. Vorrichtung (1; 11; 21; 31) nach einem der Ansprüche 1 bis 7, **dadurch gekennzeichnet, dass** das Halteorgan (3) allgemein stimmgabelförmig ausgebildet ist.

9. Teil (25) aus Verbundwerkstoff, das an seiner Oberfläche (S') eine Haltevorrichtung nach einem der Ansprüche 1 bis 8 aufweist.

10. Teil (25) nach Anspruch 9, **dadurch gekennzeichnet, dass** es ein Flugtriebwerkgehäuse bildet.

11. Anordnung mit einem ersten Teil (25) nach einem der Ansprüche 9 und 10 und einem zweiten Teil (26), das mit Hilfe der Haltevorrichtung an dem ersten Teil gehalten ist.

12. Luftfahrzeug, das mit einer Anordnung nach Anspruch 11 ausgestattet ist.

13. Verfahren zur Herstellung einer Haltevorrichtung (1; 11; 31; 41) nach einem der Ansprüche 2, 3 und 5 bis 8, umfassend die folgenden Schritte:
a) Anlegen eines Druckes an wenigstens eine Faserstruktur (50), die in einem Formhohlraum vorhanden ist, wobei die Faserstruktur umfasst:
▪ ein Halteorgan (3; 30) mit einer Basis (4) und Haltelaschen (5a; 5b; 35a; 35b), die sich von der Basis (4) aus auf jeder Seite derer erstrecken, wobei die Haltelaschen (5a; 5b; 35a; 35b) dazu bestimmt sind, einen Bereich zum Halten (Z) eines zweiten Teils (26) an einem ersten Teil (25) zu definieren, und
▪ wenigstens eine erste imprägnierte Faserlage (12a) und wenigstens eine zweite imprägnierte Faserlage (12b), wobei die Basis (4) des Halteorgans zwischen der ersten und der zweiten imprägnierten Faserlage vorhanden ist, wobei die zweite imprägnierte Faserlage (12b) Öffnungen (13a; 13b) aufweist, die von den Haltelaschen (5a; 5b; 35a;
35b) durchgriffen sind, wobei ein Mittelteil (C) der zweiten imprägnierten Faserlage (12b) der Basis (4) des Halteorgans (3; 30) gegenüberliegt und wobei Seitenteile (L) der zweiten imprägnierten Faserlage (12b) auf beiden Seiten des Mittelteils (C) gelegen sind,
wobei der während des Schrittes a) angelegte Druck auf den Mittelteil (C) und auf die Seitenteile (L) der zweiten imprägnierten Faserlage (12b) ausgeübt wird,
b) Wärmebehandlung, um eine Matrix in der Porosität der ersten und der zweiten Faserlage zu bilden und somit die Haltevorrichtung zu erhalten, wobei der während des Schrittes a) angelegte Druck während des Schrittes b) aufrechterhalten wird.

14. Verfahren nach Anspruch 13, **dadurch gekennzeichnet, dass** die Faserstruktur (50) zwischen einem Träger (40) und einem unteren Block (45) vorhanden ist, durch den sich die Haltelaschen (5a; 5b; 35a; 35b) erstrecken, wobei der untere Block (45) während des Schrittes a) den Druck an die Seitenteile (L) der zweiten imprägnierten Faserlage (12b) anlegt.

15. Verfahren nach Anspruch 14, **dadurch gekennzeichnet, dass** der untere Block (45) durch Zusammenfügen zweier Halbblöcke (45a; 45b) gebildet wird, wobei die beiden Halbblöcke (45a; 45b) auf beiden Seiten der Haltelaschen (5a; 5b; 35a; 35b) beim Ausformen der erhaltenen Haltevorrichtung voneinander trennbar sind.

16. Verfahren nach einem der Ansprüche 13 bis 15, **dadurch gekennzeichnet, dass** der Formhohlraum wenigstens während des Schrittes b) evakuiert wird.

## Claims

1. A holder device (1; 11; 21; 31) for being present at the surface (S') of a first part (25) made of composite material in order to enable a second part (26) to be held to the first part (25), the holder device (1; 11; 21; 31) being **characterised in that** it comprises :
• a body (2; 2') made of composite material comprising a fiber structure and a matrix present in the pores of the fiber structure; and
• a holder member (3; 30) comprising a base (4) and holder tabs (5a; 5b; 35a; 35b) extending from either side of the base (4), the holder tabs (5a; 5b; 35a; 35b) being for defining a holding zone (Z) for holding the second part (26) to the first part (25), the base (4) of the holder device being present in the body (2; 2'), and the holder tabs (5a; 5b; 35a; 35b) projecting through a surface (S) of the body (2; 2').

2. A device (1; 11; 31; 41) according to claim 1, **characterized in that** the base (4) of the holder device is draped between at least one first densified fiber ply (10a) and at least one second densified fiber ply (10b), the second fiber ply (10b) presenting openings through which the holder tabs (5a; 5b; 35a; 35b) extend.

3. A device (11) according to claim 2, **characterized in that** at least one third densified fiber ply (10c) with an opening is present between the first fiber ply (10a) and the second fiber ply (10b), the base (4) of the holder member (3) being received in the opening in the third fiber ply (10c).

4. A device (21) according to claim 1, **characterized in that** the fiber structure is a fiber structure obtained by three-dimensional weaving.

5. A device (1; 11; 21; 31) according to any one of claims 1 to 4, **characterized in that** the holder tabs (5a; 5b) are configured to enable the second part (26) to be clipped to the first part (25).

6. A device (41) according to any one of claims 1 to 4, **characterized in that** the holder tabs (35a; 35b) are configured to define a clamping collar suitable for holding the second part by clamping it to the first part.

7. A device (31) according to any one of claims 1 to 6, **characterized in that** it further includes one or more centering pegs (P) present on the surface (S") of the device (31) opposite from the surface through which the holder tabs (5a; 5b) pass.

8. A device (1; 11; 21; 31) according to any one of claims 1 to 7, **characterized in that** the holder member (3) is generally in the form of a spring clip.

9. A part (25) made of composite material and presenting at its surface (S') a holder device according to any one of claims 1 to 8.

10. A part (25) according to claim 9, **characterized in that** it constitutes an aeroengine casing.

11. An assembly comprising a first part (25) according to claim 9 or claim 10, and a second part (26) held to the first part using the holder device.

12. An aircraft fitted with an assembly according to claim 11.

13. A method of fabricating a holder device (1; 11; 31; 41) according to any one of claims 2, 3, and 5 to 8, the method comprising the following steps:
a) applying pressure to at least one fiber structure (50) present in a mold cavity, the fiber structure comprising:
• a holder member (3; 30) comprising a base (4) and holder tabs (5a; 5b; 35a; 35b) extending from either side of the base (4), the holder tabs (5a; 5b; 35a; 35b) being for defining a holding zone (Z) for holding the second part (26) to the first part (25); and
• at least one first impregnated fiber ply (12a) and at least one second impregnated fiber ply (12b), the base (4) of the holder member being present between the first and second impregnated fiber plies, the second impregnated fiber ply (12b) presenting openings (13a; 13b) through which the holder tabs (5a; 5b; 35a; 35b) pass, a central portion (C) of the second impregnated fiber ply (12b) facing the base (4) of the holder member (3; 30), and side portions (L) of the second impregnated fiber ply (12b) being situated on either side of the central portion (C);
the pressure applied during step a) being exerted on the central portion (C) and on the side portions (L) of the second impregnated fiber ply (12b); and
b) applying heat treatment in order to form a matrix in the pores of the first and second plies and thereby obtain the holder device, the pressure applied during step a) being maintained during step b).

14. A method according to claim 13, **characterized in that** the fiber structure (50) is present between a support (40) and a bottom block (45) through which the holder tabs (5a; 5b; 35a; 35b) extend, the bottom block (45) applying pressure against the side portions (L) of the second impregnated fiber ply (12b) during step a).

15. A method according to claim 14, **characterized in that** the bottom block (45) is formed by assembling together two half-blocks (45a; 45b), the two half-blocks (45a; 45b) being separable from each other on either side of the holder tabs (5a; 5b; 35a; 35b) while unmolding the resulting holder device.

16. A method according to any one of claims 13 to 15, **characterized in that** the mold cavity is evacuated, at least during step b).
